# EUROPÄISCHE PATENTSCHRIFT

(11) **EP 4 544 100 B1**
(45) Veröffentlichungstag und Bekanntmachung des Hinweises auf die Patenterteilung: **17.06.2026**
(21) Anmeldenummer: 23745043.2
(22) Anmeldetag: 26.06.2023
(51) Int. Cl.: C25B 9/63, C25B 9/65, C25B 9/70, C25B 9/73, H01M 8/02, H01M 8/2432

(54) **ANSCHLUSSEINHEIT FÜR ZELLSTAPEL**
CONNECTION UNIT FOR A CELL STACK
UNITÉ DE RACCORDEMENT POUR EMPILEMENT DE CELLULES

(30) Priorität: 27.06.2022 AT 504622022
(43) Veröffentlichungstag der Anmeldung: 30.04.2025
(73) Patentinhaber: H2i GreenHydrogen GmbH, 4702 Wallern an der Trattnach (AT)
(72) Erfinder: NEUBACHER, Dietmar, 8044 Graz (AT); SCHNEIDER, Philipp, 8010 Graz (AT)
(74) Vertreter: Burger, Hannes Alfred
(86) Internationale Anmeldenummer: PCT/AT2023/060202
(87) Internationale Veröffentlichungsnummer: WO 2024/000001

(56) Entgegenhaltungen:
- WO-A1-2023/011714
- DE-A1- 102019 103 555
- US-A1- 2006 204 815
- US-A1- 2019 260 062

## Beschreibung

Die Erfindung betrifft eine Elektrochemievorrichtung umfassend eine Anschlussvorrichtung, anreihbare elektrochemische Zellen und eine Betriebsmittelvorrichtung. Insbesondere kann die erfindungsgemäße Elektrochemievorrichtung zur elektrolytischen Erzeugung von Wasserstoff in Verbindung mit Anionen-Austauschermembranen in den elektrochemischen Zellen verwendet werden. Bei vorliegender erfindungsgemäßen Elektrochemievorrichtung sind elektrochemische Zellen ausgehend von einer Anschlusszone der Anschlussvorrichtung entlang einer ersten Normalachse zur ersten Anschlusszone aneinandergereiht angeordnet, sodass ein Zellstapel ausgebildet ist. Die Anschlussvorrichtung umfasst eine Anschlussgruppe mit einem ersten und einem zweiten Anschlussorgan. Der Zellstapel ist mittels der Anschlussorgane bzw. mittels zumindest einem Anschlussorgan mit der Betriebsmittelvorrichtung fluidisch koppelbar und somit einerseits mit Elektrolyt versorgbar und/oder andererseits ist Produktgas aus dem Zellstapel abführbar.

Aus dem Stand der Technik sind diverse Ausführungsformen von Aufbauten von Elektrochemievorrichtungen bekannt. Beispielsweise zeigt die Schrift DE 10259386 A1 einen Druckelektrolyseur mit einem Druckbehälter und einen Elektrolysezellenblock aus aneinander angereihten Elektrolysezellen, sowie zwei Endplatten, zwischen welchen der Elektrolysezellenblock eingespannt ist. Weiters zeigt die Schrift WO 2015102479 A1 einen grundsätzlich ähnlichen Aufbau mit einem Zellstapel zwischen zwei Endplatten. DE10201910355 offenbart auch eine ähnliche Vorrichtung.

Bei Großanlagen zur elektrolytischen Erzeugung von Wasserstoff oder zur Verstromung von Wasserstoff finden mit unter eine Vielzahl solcher, aus dem Stand der Technik bekannter Elektrolyse- bzw. Brennstoffzellenvorrichtungen mit oben dargelegtem Aufbau verwendet. Hinsichtlich der Betriebssicherheit sowie der wirtschaftlichen Herstellung, Wartung und Betriebsweise bei Verwendung in einer Großanlage ist dieser dargelegte grundsätzliche Aufbau einer Elektrolyse- bzw. Brennstoffzellenvorrichtung jedoch nachteilig.

Aufgabe der vorliegenden Erfindung war es, die Nachteile des Standes der Technik zu überwinden und eine Vorrichtung zur Verfügung zu stellen, mittels derer die Nachteile des Standes der Technik überwunden werden.

Diese Aufgabe wird durch eine Vorrichtung gemäß den Ansprüchen gelöst.

Bei erfindungsgemäßer Elektrochemievorrichtung wird eine Anschlussvorrichtung für wenigstens zwei Zellstapel gemeinsam verwendet, wobei der erste und der zweite Zellstapel jeweils über die Anschlussorgane deren jeweiliger Anschlussgruppe fluidisch mit der Betriebsmittelvorrichtung gekoppelt sind. Die Anschlussvorrichtung kann im Zusammenwirken mit einer ersten Endplatte den ersten Zellstapel aufnehmen und im Zusammenwirken mit einer zweiten Endplatte den zweiten Zellstapel aufnehmen. Gleichzeitig sind somit beide Zellstapel an der Anschlussvorrichtung gehaltert. Die Anschlussvorrichtung kann demnach als stabile Trägerplattform für die wenigstens zwei Zellstapel fungieren.

Weiters ist durch die erfindungsgemäße Elektrochemievorrichtung eine Miniaturisierung bzw. Modularisierung der elektrochemischen Zellen bzw. der einzelnen plattenförmigen Einzelkomponenten der Zellstapel begünstigt. Somit kann die Stückzahlen der Einzelkomponenten gegenüber herkömmlichen Bauformen erhöht werden und die Wirtschaftlichkeit in der Herstellung der Elektrochemievorrichtung ist verbessert. Ein synergetischer Nebeneffekt der erfindungsgemäßen Elektrochemievorrichtung ist, dass niedrigere Zellspannungen bei insgesamt mehr und dafür baulich kleineren Stacks im Betrieb der Elektrochemievorrichtung bei der beispielsweisen elektrolytischen Wasserstofferzeugung realisiert werden können.

Des Weiteren kann es zweckmäßig sein, wenn die Anschlussvorrichtung einstückig verbunden ausgebildet ist. Dadurch ist die Anschlussvorrichtung besonders stabil und kann die, durch die Aufnahme der Zellstapel eingeleitete Torsion aufnehmen und der Elektrochemievorrichtung die notwendige Stabilität verleihen. In weiterer Folge ist dadurch auch gewährleistet, dass die jeweilige Anschlussgruppe in einer Anschlusszone liegt und dass keine Verwindung der Anschlusszonen auftritt.

Ferner kann vorgesehen sein, dass die Anschlussvorrichtung einteilig ausgebildet ist. Damit kann wiederum die Stabilität der Anschlussvorrichtung und somit in weiterer Folge die Stabilität der gesamten Elektrochemievorrichtung erhöht werden.

Laut Anspruch 1 ist die erste Anschlusszone in einer ersten Anschlussebene der Anschlussvorrichtung ausgebildet und die zweite Anschlusszone in einer zweiten Anschlussebene der Anschlussvorrichtung ausgebildet ist, wobei die erste Anschlussebene parallel und voneinander distanziert zur zweiten Anschlussebene angeordnet ist. Dadurch ist die erste Anschlusszone der zweiten Anschlusszone gegenüberliegend angeordnet.

Somit kann eine weitere Reduktion von Einzelkomponenten der Elektrochemievorrichtung erreicht werden, da ein Bereich des Anschlusselementes, in welchem die erste und die zweite Anschlussebene gegenüberliegend angeordnet sind, für zwei Zellstapel verwendet werden kann.

Es kann auch zweckmäßig sein, wenn die Anschlussebenen zueinander in einem Winkel ausgerichtet sind. Beispielsweise ist eine Ausführungsform mit einem Winkel von 90° denkbar, wobei die Anschlussvorrichtung weiterhin ein gemeinsames Tragelement aufweist, auf welchem die beiden Anschlusszonen ausgebildet sind.

Vorteilhaft ist auch eine Ausprägung, gemäß welcher vorgesehen sein kann, dass die erste Normalachse und die zweite Normalachse zueinander deckungsgleich ausgerichtet sind. Damit sind, bei gegenüberliegend angeordneten Anschlusszonen, die Zellstapel linientreu entlang deren Achsen angeordnet, wodurch gemeinsame Verbindungselemente der Zellstapel zur Verbindung mit deren Endplatten und der Anschlussvorrichtung verwendet werden können. Dies bringt wiederum einer Reduktion der Einzelkomponenten der Elektrochemievorrichtung und damit wirtschaftliche Vorteile, aber auch eine reduzierte Komplexität beim Zusammenbau der Elektrochemievorrichtung.

Gemäß einer Weiterbildung ist es möglich, dass die erste Normalachse und die zweite Normalachse zueinander parallel und versetzt ausgerichtet sind. Damit kann, bei gegenüberliegenden Anschlussebenen der Anschlussvorrichtung, eine jeweils eigenständige Halterung der Zellstapel am Anschlusselement vorgesehen werden, wobei gleichzeitig weiterhin die Anschlussvorrichtung als gemeinsames Tragelement für die beiden Zellstapel fungiert.

Ferner kann es zweckmäßig sein, wenn die erste Anschlusszone und die zweite Anschlusszone in einer gemeinsamen Anschlussebene der Anschlussvorrichtung angeordnet sind, sodass die erste Normalachse und die zweite Normalachse zueinander parallel und voneinander distanziert angeordnet sind. Damit können die Zellstapel nebeneinander angeordnet werden, was insbesondere für Zusammenbau und Wartung der Elektrochemievorrichtung einen verringerten Komplexitätsgrad bewirkt, da eine mit der Anschlussvorrichtung ein zentrales Tragelement für die Zellstapel verwendet wird.

Darüber hinaus kann vorgesehen sein, dass das erste Anschlussorgan der ersten Anschlussgruppe mit dem dritten Anschlussorgan der zweiten Anschlussgruppe mittels einem ersten Fluidkanal mit der Betriebsmittelvorrichtung fluidisch koppelbar ist, und das zweite Anschlussorgan der ersten Anschlussgruppe mit dem vierten Anschlusselement der zweiten Anschlussgruppe mittels einem zweiten Fluidkanal mit der Betriebsmittelvorrichtung fluidisch koppelbar ist, wobei der erste Fluidkanal und der zweite Fluidkanal in der Anschlussvorrichtung innenliegend bzw. integriert ausgebildet sind. Damit kann eine weitere Bauteilreduktion der Elektrochemievorrichtung erreicht werden, da einzelne Leitungen sowie Leitungsverbindungs-Elemente und Leitungsüberwachungs-Elemente von den innenliegenden Fluidkanälen ersetzt werden. Somit ist die Montagezeit der Elektrochemievorrichtung entscheidend verringert und auch die Fehleranfälligkeit bei der Montage ist verringert. Weiters kann dadurch die Sicherheit der Elektrochemievorrichtung erhöht werden, da weniger Rohrverbindungen auf deren Dichtheit überprüft werden müssen, was insbesondere in der erfindungsgemäßen Elektrochemievorrichtung vorteilhaft ist, da die Medien Elektrolyt und Gas umfassen.

Es kommt also durch die Bauteilreduktion insgesamt zu einer Reduktion der Bauteile, die mit alkalischen Flüssigkeiten in Berührung stehen, wodurch sich in weitere Folge auch ein verringertes Risiko im Hinblick auf Flüssigkeitskontakt bei Wartungs- oder Demontage-Arbeiten ergibt. Weiters ergibt sich durch die Bauteilreduktion eine Gewichtseinsparung gegenüber herkömmlichen Anordnungen mit einzelnen Endplatten und jeweils einzeln fluidisch gekoppeltem Zellstapel, da auch die Anschlussvorrichtung ausgehöhlt bzw. mit innenliegenden Fluidkanälen leichter ausgebildet ist.

Des Weiteren kann vorgesehen sein, dass der erste Fluidkanal und der zweite Fluidkanal jeweils als Bohrung ausgebildet sind, wobei sich der erste Fluidkanal und der zweite Fluidkanal jeweils ausgehend von einer Seitenfläche der Anschlussvorrichtung erstrecken und an der ersten Anschlusszone und der wenigstens einen zweiten Anschlusszone vorbeigeführt sind. Dadurch wird eine präzise Herstellbarkeit der Fluidkanäle begünstigt, beispielsweise gegenüber dem Herstellungsverfahren Gießen. Weiters ist mit entsprechender Werkzeugwahl eine Bearbeitung der Bohrungsoberflächen ermöglicht, sodass im Speziellen die gewünschten Oberflächeneigenschaften der Bohrungen im Hinblick auf eine optimale Strömungsführung der Fluide in den Fluidkanälen eingestellt werden kann. Es kann vorgesehen sein, dass die sich ausgehend von der Seitenfläche erstreckenden Bohrungen ausschließlich zur Verbindung der Anschlussorgane im Inneren der Anschlussvorrichtung verwendet werden, und somit der Bohrungseintritt an der Seitenfläche der Anschlussvorrichtung verschlossen wird. In weitere Folge kann von einer beliebigen anderen Fläche der Anschlussvorrichtung ein Zugang zum jeweiligen Fluidkanal geschaffen werden, über welchen der jeweilige Fluidkanal mit der Betriebsmittelvorrichtung fluidisch koppelbar ist. Somit kann die Position der Kopplung eines jeweiligen Fluidkanals mit der Betriebsmittelvorrichtung an der Anschlussvorrichtung variabel gewählt werden und so optimal auf die Einbausituation der Anschlussvorrichtung und der Zellstapel im Rahmen der Elektrochemievorrichtung Rücksicht genommen werden.

Gemäß einer besonderen Ausprägung ist es möglich, dass die Anschlussvorrichtung zweiteilig aus einem ersten Teilelement und einem zweiten Teilelement ausgebildet ist, wobei das erste Teilelement die erste Anschlusszone umfasst, und wobei eine erste Querschnittshälfte des ersten Fluidkanals überwiegend im ersten Teilelement und eine zweite Querschnittshälfte des ersten Fluidkanals überwiegend im zweiten Teilelement ausgebildet sind. Damit wird auf einfache Weise die Möglichkeit geschaffen, dass die Fluidkanäle durch Bearbeitung der jeweiligen Teilelemente herstellbar sind. Es ist beispielsweise ein CNC-Fräsverfahren denkbar, wobei nach entsprechender Bearbeitung der Fluidkanäle die Anschlussvorrichtung aus den Teilelementen einstückig zusammengefügt wird. Weiterführend ergibt sich durch die Teilung der Anschlussvorrichtung in zwei Teilelemente der Vorteil, dass die Fluidkanäle nach Ausbildung dergleichen mittels eines weiteren Verfahrens, wie beispielsweise einer Oberflächenbeschichtung, auf einfache Weise behandelt werden können. Weiters ergibt sich der Vorteil, dass die Anschlussvorrichtung, entsprechend deren Anforderungen an die Stabilität der gesamten Elektrochemievorrichtung, auf Grund der Teilung in zwei Teilelemente mit Ausnehmungen versehen werden kann, um eine Gewichtsreduktion herbeizuführen. Dabei ist unter anderem vorteilhaft, dass ein Hantieren mit der Anschlussvorrichtung, beispielsweise bei Montage, Demontage oder Wartung, erleichtert ist.

Weiters wird durch den zweiteiligen Aufbau der Anschlussvorrichtung eine spezifisch und auf die Anforderungen der einzelnen Zellstapel ausgelegte Führung der Fluidkanäle oder Ausgestaltung der Fluidkanäle ermöglicht. Es ist beispielsweise denkbar, dass der erste Fluidkanal über dessen Längsverlauf einen in Strömungsrichtung konisch zusammenlaufenden Querschnittsverlauf aufweisen kann. Auch können dadurch spezifische und das Strömungsbild über den Strömungsverlauf verändernde Abschnitte, wie beispielsweise ein Drosselorgan, in einen Strömungskanal direkt integriert werden. Dies verringert wiederum die notwendige Anzahl an Einzelbauelementen der Elektrochemievorrichtung, wenn, wie in dem Beispiel erwähnt, beispielsweise ein Drosselorgan bereits in der Anschlussvorrichtung integriert ist und nicht in einer weiteren Rohrleitung integriert werden muss.

Entsprechend einer vorteilhaften Weiterbildung kann vorgesehen sein, dass das zweite Teilelement die zweite Anschlusszone umfasst. Damit kann eine weitere Gewichtsreduktion und Materialeinsparung erreicht werden. Auch kann somit die Anschlussvorrichtung beidseitig voll ausgenutzt werden, was eine Bauteilreduktion bei Verwendung von mehreren Elektrochemievorrichtungen in einer Großanlage bewirkt.

Insbesondere kann es vorteilhaft sein, wenn die Anschlussvorrichtung dreiteilig aus einem ersten Teilelement, einem zweiten Teilelement und einem dritten Teilelement ausgebildet ist, wobei das erste Teilelement die erste Anschlusszone umfasst und das zweite Teilelement die zweite Anschlusszone umfasst, wobei das dritte Teilelement zwischen dem ersten Teilelement und dem zweiten Teilelement angeordnet ist, und wobei der erste Fluidkanal überwiegend im dritten Teilelement ausgebildet ist. Damit kann vor allem die Herstellung der Fluidkanale vereinfacht werden. Es ist denkbar, dass das erste Teilelement und das zweite Teilelement aus einem metallischen Material mit hoher Tragfähigkeit ausgebildet sind, wohingegen das dritte Teilelement aus einem einfacher zu bearbeitendem und bei der Bearbeitung werkzeugschonendem Material hergestellt ist. Denkbar vorteilhaft wäre die Herstellung des dritten Teilelements aus einem Spritzgussteil, wobei so auch die Fluidkanäle einfach, präzise und kostengünstig herstellbar sind. In jedem Fall kann es vorteilhaft sein, wenn die Fluidkanäle und gegebenenfalls weitere die Strömungsführung beeinflussende Elemente zumindest überwiegend im dritten Teilelement ausgebildet sind.

Ferner kann vorgesehen sein, dass der erste Fluidkanal ein Drosselorgan um-fasst, wobei das Drosselorgan in der Anschlussvorrichtung integriert bzw. innen-liegend ausgebildet oder angeordnet ist. Durch die Integration des Drosselorgans kann dieses Bauteil als weiteres Anbauteil an die Anschlussvorrichtung ausgespart werden und eine Bauteilreduktion der Elektrochemievorrichtung erreicht werden.

Darüber hinaus kann vorgesehen sein, dass die Anschlussorgane als Langlochbohrungen ausgebildet sind, wobei die Langlochbohrungen jeweils entlang einem Kreisdurchmesser um die, der jeweiligen Anschlusszone zugehörige Normalachse, als ein kreissegmentförmiges Langloch ausgebildet sind. Damit kann die Anschlussvorrichtung vielseitig verwendet werden. Insbesondere ist es denkbar vorteilhaft, dass die Anschlussvorrichtung somit für unterschiedliche daran anschließend angeordnete elektrochemische Zellen verwendet werden kann, was auch im Hinblick auf eine Weiterverwendung der Anschlussvorrichtung über verschiedene Zellen-Weiterentwicklungen vorteilhaft ist.

Vorteilhaft ist auch eine Ausprägung, gemäß welcher vorgesehen sein kann, dass der erste Zellstapel zwischen einer ersten Endplatte und der Anschlussvorrichtung gelagert ist und dass der zweite Zellstapel zwischen einer zweiten Endplatte und der Anschlussvorrichtung gelagert ist, wobei die erste Endplatte mittels eines ersten Verbindungselements und die zweite Endplatte mittels eines zweiten Verbindungselements jeweils mit der Anschlussvorrichtung gekoppelt sind. Somit kann ein einzelner Zellstapel ausgetauscht werden, ohne, dass die gesamte Elektrochemievorrichtung zerlegt werden muss. Weiters ist dadurch die Vormontage der Einzelkomponenten der Elektrochemievorrichtung vereinfacht. Auch ist es vorteilhaft, dass somit Zellstapel mit unterschiedlicher Zellenanzahl an derselben Anschlussvorrichtung verwendet werden können, wobei jeder Zellstapel für sich entsprechende Wärmeausdehnungen im Betrieb erfahren kann. Es ist auch denkbar vorteilhaft, wenn die jeweiligen Endplatten an einem Rahmenelement der Elektrochemievorrichtung losgelagert sind, sodass die jeweiligen Zellstapel die entsprechenden Wärmeausdehnungen individuell erfahren können.

Gemäß einer Weiterbildung ist es möglich, dass die Anschlussvorrichtung an einer Montagefläche ein Befestigungselement umfasst, wobei die Anschlussvorrichtung mittels dem Befestigungselement an einem Gehäuse oder in einem Rahmen aufnehmbar bzw. haltbar ist. Damit übernimmt die Anschlussvorrichtung im Zusammenwirken mit dem Rahmen die Tragfunktion für die gesamte Elektrochemievorrichtung und die Elektrochemievorrichtung ist als gesamte Einheit in eine Gesamtanlage integrierbar. Beispielsweise kann es vorteilhaft sein, wenn der Rahmen und damit die gesamte Elektrochemievorrichtung ein einem dafür vorgesehenen Schrank oder Regal integriert ist. Die Elektrochemievorrichtung kann somit als eine modularisierte Einheit in eine Großanlage integriert werden.

Ferner kann es zweckmäßig sein, wenn die anreihbaren elektrochemischen Zellen eine Anionen-Austauschermembran umfassen. Bei Verwendung der AEM-Technologie in der erfindungsgemäßen Elektrochemievorrichtung ist von besonderem Vorteil, dass Zellstapel aus elektrochemischen Zellen besonders einfach austauschbar sind, da diese Technologie zurzeit wiederholte Entwicklungsschritte erfährt und dementsprechend auch unterschiedlichen Entwicklungs-Generationen an der bestehenden Anschlussvorrichtung als zentrale Plattform verwendet werden könne. Durch die beständige Weiterentwicklung der AEM-Technologie können sich somit beispielsweise auch die Abmessungen der elektrochemischen Zellen ändern, wobei weiterhin die gleiche Anschlussvorrichtung verwendet werden kann.

Auch kann eine vorteilhafte Weiterbildung vorgesehen sein, wobei der erste Zellstapel ein erstes Verbindungsorgan und der zweite Zellstapel ein zweites Verbindungsorgan umfassen, wobei mittels des jeweiligen Verbindungsorganes die jeweils aneinandergereiht angeordneten elektrochemischen Zellen zueinander lagefest positionierbar sind. Beispielhaft kann das jeweilige Verbindungsorgan von einem, die aneinandergereiht angeordneten elektrochemischen Zellen in Umfangsrichtung umschließenden Schlauch, Schrumpfschlauch oder von einem anderen umhüllenden bzw. einhüllenden Verbindungsorgan gebildet sein. Auch ist es denkbar, dass der jeweilige Zellstaple umwickelt und eingewickelt ist, beispielsweise mit einem Gewebeband oder Ähnlichem, und dadurch das jeweilige Verbindungsorgan ausgebildet ist. Weiters ist kann eine Ausführungsform denkbar vorteilhaft sein, bei welcher die einzelnen aneinandergereiht angeordneten elektrochemischen Zellen zueinander verklebt werden. Des Weiteren ist ein Verklemmen der einzelnen aneinandergereiht angeordneten elektrochemischen Zellen bzw. ein Fixieren zueinander mittels einer entsprechenden Klemmvorrichtung des jeweiligen Verbindungsorgans denkbar, sodass die einzelnen aneinandergereiht angeordneten elektrochemischen Zellen zueinander reibschlüssig haltbar sind.

Ferner kann es zweckmäßig sein, wenn das jeweilige Verbindungsorgan von zueinander formkomplementären Nuten und Federn in den einzelnen aneinandergereiht anordbaren elektrochemischen Zellen ausgebildet ist. Dadurch können die elektrochemischen Zellen als Baugruppe einen Zellstapel ausbilden, wobei die einzelnen elektrochemischen Zellen zueinander zumindest teilweise oder abschnittweise formschlüssig positionierbar sind. Vorteilhaft ist bei all diesen möglichen Ausgestaltungsformen, dass ein Zellstapel als eine gemeinsame Baugruppe aus zueinander positioniert gehaltenen elektrochemischen Zellen gebildet ist. Damit ist ein Zellstapel als zusammenhängendes Paket an einzelnen elektrochemischen Zellen leicht austauschbar. Synergetisch zu den bereits genannten Vorteilen ist dabei von Vorteil, dass die Montage und Wartung der Elektrochemievorrichtung für einen Bediener entscheidend erleichtert sind und somit mögliche Fehlerquellen minimiert werden. Weiterführend ist es auch denkbar, dass ein Zellstapel aus mehreren zusammenhängenden Gruppen aus einzelnen elektrochemischen Zellen ausgebildet ist. Somit kann eine weitere Modularisierung erreicht werden. Somit ist ein weiterer synergetischer Nebeneffekt der erfindungsgemäßen Elektrochemievorrichtung in Verbindung mit zusammenhängenden Gruppen aus einzelnen elektrochemischen Zellen, dass niedrigere Zellspannungen bei insgesamt mehr und dafür baulich kleineren Stacks oder Gruppen aus Zellen im Betrieb der Elektrochemievorrichtung bei der beispielsweisen elektrolytischen Wasserstofferzeugung realisiert werden können.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausführungsform der Elektrochemievorrichtung;
- Fig. 2: eine erste mögliche Ausführungsform der Anschlussvorrichtung;
- Fig. 3: eine weitere Ansicht der Anschlussvorrichtung;
- Fig. 4: eine zweite mögliche Ausführungsform der Anschlussvorrichtung;
- Fig. 5: eine dritte mögliche Ausführungsform der Anschlussvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

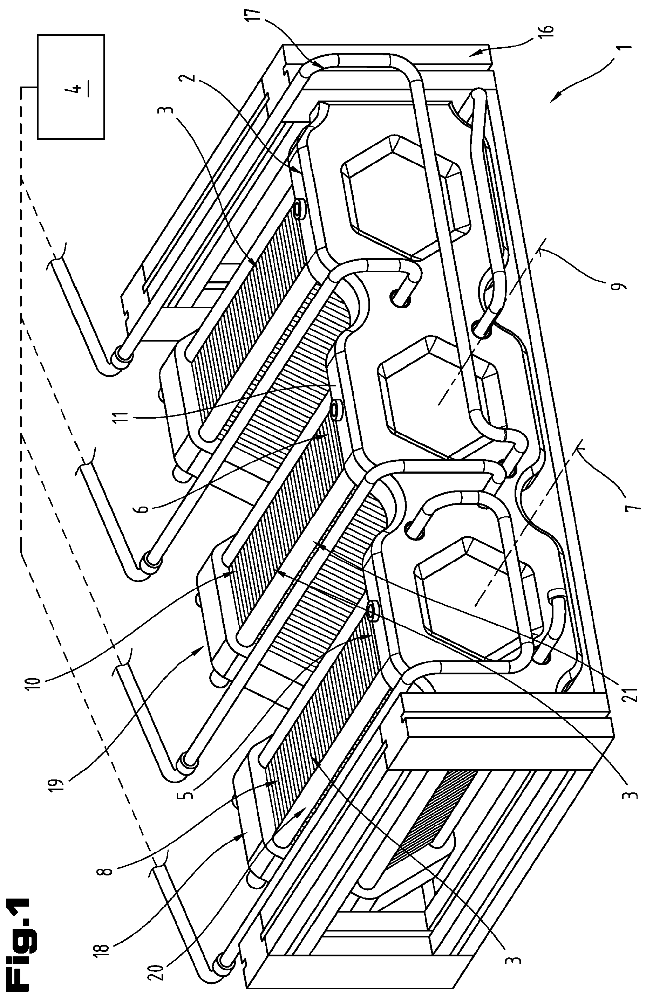

Fig. 1 zeigt eine schematische Darstellung einer möglichen Ausführungsform der Elektrochemievorrichtung 1. Die Elektrochemievorrichtung 1 kann eine Anschlussvorrichtung 2, aneinander anreihbare elektrochemische Zellen 3, wie beispielsweise Elektrolyse- oder Brennstoffzellen, insbesondere jedoch Elektrolysezellen mit einer Anionen-Austauschermembran, und eine Betriebsmittelvorrichtung 4 umfassen. Die Anschlussvorrichtung 2 kann eine erste Anschlusszone 5 und wenigstens eine zweite Anschlusszone 6 aufweisen. Elektrochemische Zellen 3 können ausgehend von der ersten Anschlusszone 6 entlang einer ersten Normalachse 7 zur ersten Anschlusszone 6 aneinandergereiht sein und einen ersten Zellstapel 8 bilden. Weiters können elektrochemische Zellen 3 ausgehend von der zweiten Anschlusszone 6 entlang einer zweiten Normalachse 9 aneinandergereiht angeordnet sein und einen zweiten Zellstapel 10 bilden. Die erste Anschlusszone 5 und die zweite Anschlusszone 6 können dabei auf einem gemeinsamen Tragelement 11 angeordnet bzw. ausgebildet sein.

Weiters kann die Elektrochemievorrichtung 1 einen Rahmen 16 umfassen, wobei die Anschlussvorrichtung 2 mittels einem Befestigungselement 31 an einer Montagefläche 17 am Rahmen 16 befestigt bzw. gehaltert ist. Als Befestigungselement 31 kann beispielsweise ein Gewindeloch in der Anschlussvorrichtung 2 ausgebildet sein. Die Elektrochemievorrichtung 1 kann eine erste Endplatte 18 umfassen, wobei der erste Zellstapel 8 zwischen der ersten Endplatte 18 und der ersten Anschlusszone 5 der Anschlussvorrichtung 2 gelagert sein kann. Die erste Endplatte 18 kann mittels eines ersten Verbindungselements 20 mit der Anschlussvorrichtung 2 verbunden sein, sodass der erste Zellstapel 8 zwischen der ersten Endplatte 18 und der Anschlussvorrichtung 2 lagefest fixiert bzw. gehaltert ist. Die Elektrochemievorrichtung 1 kann eine zweite Endplatte 19 umfassen, wobei der zweite Zellstapel 10 zwischen der zweiten Endplatte 19 und der zweiten Anschlusszone 6 der Anschlussvorrichtung 2 gelagert sein kann. Die zweite Endplatte 19 kann mittels eines zweiten Verbindungselements 21 mit der Anschlussvorrichtung 2 verbunden sein, sodass der zweite Zellstapel 10 zwischen der zweiten Endplatte 19 und der Anschlussvorrichtung 2 lagefest fixiert bzw. gehaltert ist. Der Rahmen 16 der Elektrochemievorrichtung 1 kann derart ausgebildet sein, dass die erste Endplatte 18 und die zweite Endplatte 19 auf oder an einem Rahmenabschnitt losgelagert sind.

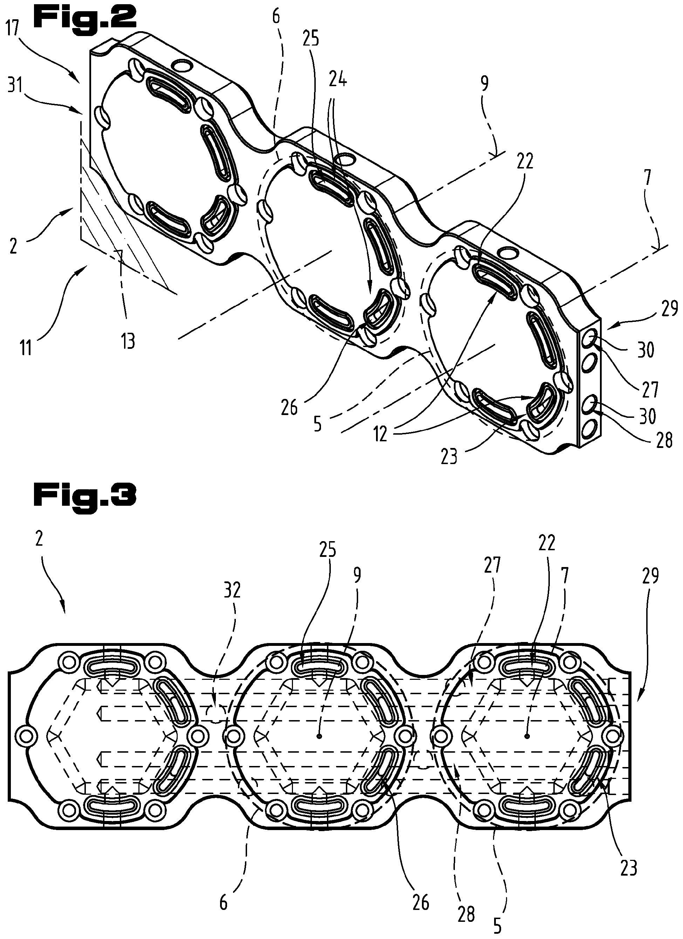

In der Fig. 2 ist eine gegebenenfalls für sich eigenständige erste mögliche Ausführungsform der Anschlussvorrichtung 2 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Bei der in Fig. 2 gezeigten möglichen Ausführungsform der Anschlussvorrichtung 2 ist die Anschlussvorrichtung 2 als ein gemeinsames Tragelement 11 ausgebildet. Das gemeinsame Tragelement 11 kann dabei einteilig oder auch einstückig ausgebildet sein. Wie aus einer Zusammenschau aus Fig. 1 und Fig. 2 ersichtlich, kann der erste Zellstapel 8 aus aneinandergereihten elektrochemischen Zellen 3 ausgehend von der ersten Anschlusszone 5 entlang der ersten Normalachse 7 ausgebildet bzw. angeordnet sein. Weiters kann ein zweiter Zellstapel 10 aus aneinandergereihten elektrochemischen Zellen 3 ausgehend von der zweiten Anschlusszone 6 entlang der zweiten Normalachse 9 ausgebildet bzw. angeordnet sein. Laut Anspruch 1 liegen die erste Anschlusszone 5 und die zweite Anschlusszone 6 nicht in der gemeinsamen Anschlussebene 13, sondern bei denen die erste Anschlusszone 5 in einer ersten Anschlussebene 14 und die zweite Anschlusszone 6 in einer zweiten Anschlussebene 15 liegt, wobei die erste Anschlussebene 14 zur zweiten Anschlussebene 15 kongruent ausgerichtet ist, und wobei die erste Anschlusszone 5 und die zweite Anschlusszone 6 weiterhin an einem gemeinsamen Tragelement 11 angeordnet sein können.

Weiters kann die Anschlussvorrichtung 2 im Bereich bzw. innerhalb der ersten Anschlusszone 5 eine erste Anschlussgruppe 12 aufweisen, mittels welcher ersten Anschlussgruppe 12 der erste Zellstapel 8 mit der Betriebsmittelvorrichtung 4 fluidisch koppelbar ist. Dabei kann die erste Anschlussgruppe 12 ein erstes Anschlussorgan 22 und ein zweites Anschlussorgan 23 umfassen. Der erste Zellstapel 8 kann beispielsweise über das erste Anschlussorgan 22 mit Elektrolyt versorgt werden und über das zweite Anschlussorgan 23 kann beispielsweise das Produktgas, bei einer Verwendung der Elektrochemievorrichtung 1 als Elektrolysevorrichtung, abgeführt werden. In analoger Weise kann die Anschlussvorrichtung 2 im Bereich bzw. innerhalb der zweiten Anschlusszone 6 eine zweite Anschlussgruppe 24 aufweisen, mittels welcher zweiten Anschlussgruppe 24 der zweite Zellstapel 10 mit der Betriebsmittelvorrichtung 4 fluidisch koppelbar ist. Dabei kann die zweite Anschlussgruppe 24 ein drittes Anschlussorgan 25 und ein viertes Anschlussorgan 26 umfassen. Der zweite Zellstapel 10 kann beispielsweise über das dritte Anschlussorgan 25 mit Elektrolyt von der Betriebsmittelvorrichtung 4 versorgt werden und über das vierte Anschlussorgan 26 kann beispielsweise das Produktgas, bei einer Verwendung der Elektrochemievorrichtung 1 als Elektrolysevorrichtung, abgeführt werden.

Die Anschlussvorrichtung 2 kann einen ersten Fluidkanal 27 aufweisen, wobei mittels dem ersten Fluidkanal 27 das erste Anschlussorgan 22 und das dritte Anschlussorgan 25 fluidisch koppelbar sind, und wobei das erste Anschlussorgan 22 und das dritte Anschlussorgan 25 mittels dem ersten Fluidkanal 27 mit der Betriebsmittelvorrichtung 4 fluidisch koppelbar sind. Weiters kann die Anschlussvorrichtung 2 einen zweiten Fluidkanal 28 aufweisen, wobei mittels dem zweiten Fluidkanal 28 das zweite Anschlussorgan 23 und das vierte Anschlussorgan 26 fluidisch koppelbar sind, und wobei das zweite Anschlussorgan 23 und das vierte Anschlussorgan 26 mit der Betriebsmittelvorrichtung 4 fluidisch koppelbar sind. Der erste Fluidkanal 27 und der zweite Fluidkanal 28 können durch Bohrungen 30 in der Anschlussvorrichtung 2 ausgebildet sein. Die Bohrungen 30 können über eine Seitenfläche 29 der Anschlussvorrichtung 2 gefertigt sein.

In der Fig. 3 ist eine weitere Ansicht der Anschlussvorrichtung 2 aus Fig. 2 gezeigt, wobei wiederum für gleiche Teile gleiche Bezugszeichen bzw. Bauteilbezeichnungen wie in den vorangegangenen Fig. 1 bis Fig. 2 verwendet werden. Um unnötige Wiederholungen zu vermeiden, wird auf die detaillierte Beschreibung in den vorangegangenen Fig. 1 bis Fig. 2 hingewiesen bzw. Bezug genommen. In Fig. 3 ist ersichtlich, dass das erste Anschlussorgan 22 und das dritte Anschlussorgan 25 mittels dem ersten Fluidkanal 27 fluidisch koppelbar sein können. Auch ist ersichtlich, dass das zweite Anschlussorgan 23 mit dem vierten Anschlussorgan 26 mittels dem zweiten Fluidkanal 28 fluidisch koppelbar sein kann. Das erste und zweite Anschlussorgan 22, 23 sind innerhalb der ersten Anschlusszone 5 angeordnet und das dritte und vierte Anschlussorgan 25, 26 sind innerhalb der zweiten Anschlusszone 6 angeordnet bzw. ausgebildet. Bei der in Fig. 3 dargestellten Ausführungsform der Anschlussvorrichtung 2 können die Fluidkanäle 27, 28 ausgehend von der Seitenfläche 29 mittels Bohrungen 30 gefertigt sein.

Um eine vorteilhaft Versorgung mit Elektrolyt oder Abfuhr von Produktgas zum bzw. aus dem jeweiligen Zellstapel 8, 10 gewährleisten zu können, können die Anschlussorgane 22, 23, 25, 26 als bananenförmige oder gekrümmte Langlöcher entlang einem Kreissegment um die jeweilige Normalachse 7, 9 der jeweiligen Anschlusszone 5, 6 ausgebildet sein.

Weiters kann die Anschlussvorrichtung 2 ein Drosselorgan 32 aufweisen. Das Drosselorgan 32 kann mit dem ersten Fluidkanal 27 fluidisch gekoppelt sein oder als Teilabschnitt des ersten Fluidkanals 27 ausgebildet sein. Jedenfalls ist das Drosselorgan 32 in der Anschlussvorrichtung 2 integriert bzw. von der Anschlussvorrichtung 2 umfasst.

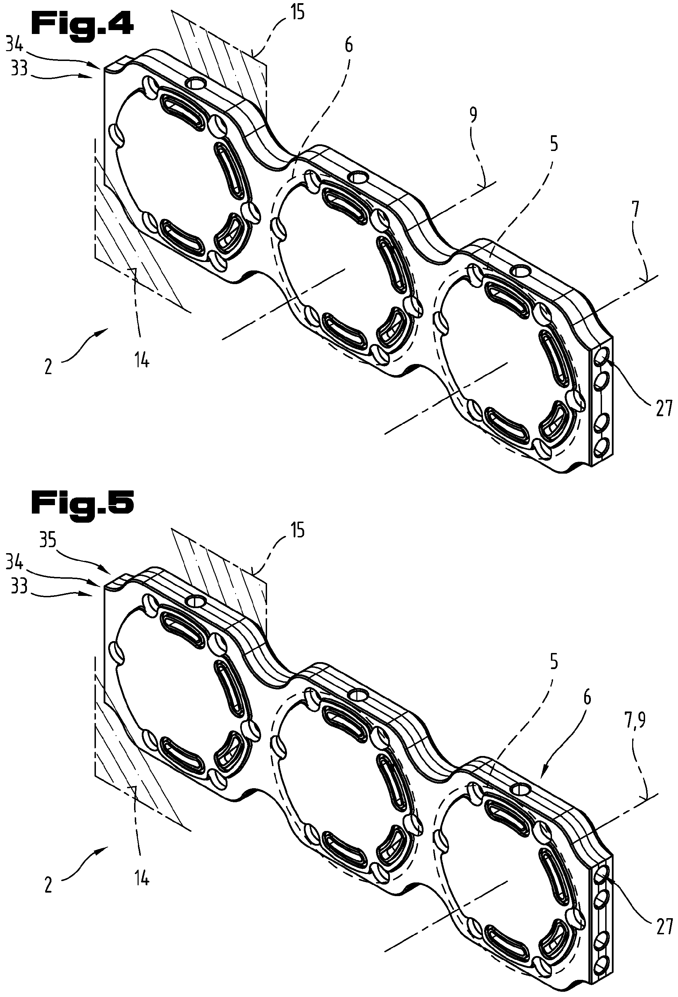

In der Fig. 4 ist eine weitere und gegebenenfalls für sich eigenständige zweite mögliche Ausführungsform der Anschlussvorrichtung 2 gezeigt, wobei wiederum für gleiche Teile gleiche Bezugszeichen bzw. Bauteilbezeichnungen wie in den vorangegangenen Fig. 1 bis Fig. 3 verwendet werden. Um unnötige Wiederholungen zu vermeiden, wird auf die detaillierte Beschreibung in den vorangegangenen Fig. 1 bis Fig. 3 hingewiesen bzw. Bezug genommen. Wie in Fig. 4 erkennbar gemacht ist, kann die Anschlussvorrichtung 2 zweiteilig aus einem ersten Teilelement 33 und einem zweiten Teilelement 34 ausgebildet ist, wobei die erste Anschlusszone 5 am ersten Teilelement 33 ausgebildet ist. Weiters kann vorgesehen sein, dass die zweite Anschlusszone 6 am ersten Teilelement 33 ausgebildet ist. Es ist aber auch denkbar, dass die erste Anschlusszone 5 am ersten Teilelement 33 ausgebildet ist, sodass der erste Zellstapel 8 entlang der ersten Normalachse 7 ausgehend von der ersten Anschlussebene 14 aus aneinandergereihten elektrochemischen Zellen 3 ausgebildet ist, und die zweite Anschlusszone 6 am zweiten Teilelement 34 ausgebildet ist, sodass der zweite Zellstapel 10 entlang der zweiten Normalachse 9 ausgehend von der zweiten Anschlussebene 15 aus aneinandergereihten elektrochemischen Zellen 3 ausgebildet ist (vgl. Fig. 5). Dabei kann vorgesehen sein, dass die Normalachsen 7, 9 deckungsgleich oder auch parallel und versetzt zueinander ausgerichtet sind. Je nach verwendetem Verbindungselement 20, 21 kann so der jeweilige Zellstapel 8, 10 an der Anschlussvorrichtung 2 gehaltert bzw. gelagert sein.

Weiters kann vorgesehen sein, dass eine Querschnittshälfte des ersten Fluidkanals 27 zu einem überwiegenden Teil im ersten Teilelement 33 und eine zweite Querschnittshälfte des ersten Fluidkanals 27 zu einem überwiegenden Teil im zweiten Teilelement 34 ausgebildet ist. Dadurch kann der erste Fluidkanal 27 auf einfache Weise beispielsweise mittels CNC-Bearbeitung gefertigt werden, wobei die Anschlussvorrichtung 2 durch entsprechendes Verbinden des ersten Teilelements 33 mit dem zweiten Teilelement 34 einstückig verbunden ausgebildet sein kann. Bei einer entsprechenden Querschnittsform des ersten Fluidkanals 27 ist es auch denkbar, dass der erste Fluidkanal 27 zur Gänze in einem der Teilelemente 33, 34 ausgebildet sein kann.

In der Fig. 5 ist eine weitere und gegebenenfalls für sich eigenständige dritte mögliche Ausführungsform der Anschlussvorrichtung 2 gezeigt, wobei wiederum für gleiche Teile gleiche Bezugszeichen bzw. Bauteilbezeichnungen wie in den vorangegangenen Fig. 1 bis Fig. 4 verwendet werden. Um unnötige Wiederholungen zu vermeiden, wird auf die detaillierte Beschreibung in den vorangegangenen Fig. 1 bis Fig. 4 hingewiesen bzw. Bezug genommen. Wie in Fig. 5 ersichtlich kann die Anschlussvorrichtung 2 dreiteilig, umfassend ein erstes Teilelement 33, ein zweites Teilelement 34 und ein drittes Teilelement 35, ausgebildet sein. Es kann vorgesehen sein, dass die erste Anschlusszone 5 am ersten Teilelement 33 ausgebildet ist, sodass der erste Zellstapel 8 entlang der ersten Normalachse 7 ausgehend von der ersten Anschlussebene 14 aus aneinandergereihten elektrochemischen Zellen 3 ausgebildet ist, und die zweite Anschlusszone 6 am zweiten Teilelement 34 ausgebildet ist, sodass der zweite Zellstapel 10 entlang der zweiten Normalachse 9 ausgehend von der zweiten Anschlussebene 15 aus aneinandergereihten elektrochemischen Zellen 3 ausgebildet ist. Dabei kann vorgesehen sein, dass die Normalachsen 7, 9 deckungsgleich oder auch parallel und versetzt zueinander ausgerichtet sind. Je nach verwendetem Verbindungselement 20, 21 kann so der jeweilige Zellstapel 8, 10 an der Anschlussvorrichtung 2 gehaltert bzw. gelagert sein. Der erste Fluidkanal 27 kann dabei vollständig vom dritten Teilelement 35 aufgenommen sein bzw. darin integriert sein, was den Vorteil hat, dass das dritte Teilelement 35 einfach für eine Bearbeitung zugänglich ist und auch die Materialwahl der einzelnen Teilelemente 33, 34, 35 entsprechend angepasst werden kann.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Elektrochemievorrichtung | 30 | Bohrung |
| 2 | Anschlussvorrichtung | 31 | Befestigungselement |
| 3 | elektrochemische Zellen | 32 | Drosselorgan |
| 4 | Betriebsmittelvorrichtung | 33 | erstes Teilelement |
| 5 | erste Anschlusszone | 34 | zweites Teilelement |
| 6 | zweite Anschlusszone | 35 | drittes Teilelement |
| 7 | erste Normalachse | | |
| 8 | erster Zellstapel | | |
| 9 | zweite Normalachse | | |
| 10 | zweiter Zellstapel | | |
| 11 | gemeinsames Tragelement | | |
| 12 | erste Anschlussgruppe | | |
| 13 | gemeinsame Anschlussebene | | |
| 14 | erste Anschlussebene | | |
| 15 | zweite Anschlussebene | | |
| 16 | Rahmen | | |
| 17 | Montagefläche | | |
| 18 | erste Endplatte | | |
| 19 | zweite Endplatte | | |
| 20 | erstes Verbindungselement | | |
| 21 | zweites Verbindungselement | | |
| 22 | erstes Anschlussorgan | | |
| 23 | zweites Anschlussorgan | | |
| 24 | zweite Anschlussgruppe | | |
| 25 | drittes Anschlussorgan | | |
| 26 | Anschlussorgan | | |
| 27 | erster Fluidkanal | | |
| 28 | zweiter Fluidkanal | | |
| 29 | Seitenfläche | | |

## Patentansprüche

1. Elektrochemievorrichtung (1) umfassend eine Anschlussvorrichtung (2), anreihbare elektrochemische Zellen (3), insbesondere Elektrolyse- oder Brennstoffzellen, und eine Betriebsmittelvorrichtung (4),
- wobei elektrochemische Zellen (3) ausgehend von einer ersten Anschlusszone (5) der Anschlussvorrichtung (2) entlang einer ersten Normalachse (7) zur ersten Anschlusszone (5) aneinandergereiht angeordnet sind und einen ersten Zellstapel (8) bilden,
- wobei die Anschlussvorrichtung (2) im Bereich der ersten Anschlusszone (5) eine erste Anschlussgruppe (12) umfasst,
-- wobei der erste Zellstapel (8) mittels der ersten Anschlussgruppe (12) mit der Betriebsmittelvorrichtung (4) fluidisch koppelbar ist,
--- wobei die erste Anschlussgruppe (12) ein erstes Anschlussorgan (22) und ein zweites Anschlussorgan (23) umfasst, sodass der erste Zellstapel (8) über die erste Anschlussgruppe (12) mit Elektrolyt versorgbar ist und/oder Produktgas vom ersten Zellstapel (8) über die erste Anschlussgruppe (12) abführbar ist,
- wobei die Anschlussvorrichtung (2) ein gemeinsames Tragelement (11) aufweist, auf welchem Tragelement (11) die erste Anschlusszone (5) und wenigstens eine zweite Anschlusszone (6) gemeinsam angeordnet sind,
- wobei elektrochemische Zellen (3) ausgehend von der zweiten Anschlusszone (6) der Anschlussvorrichtung (2) entlang einer zweiten Normalachse (9) zur zweiten Anschlusszone (6) aneinandergereiht angeordnet sind und einen zweiten Zellstapel (10) bilden,
- wobei die Anschlussvorrichtung (2) im Bereich der zweiten Anschlusszone (6) eine zweite Anschlussgruppe (24) umfasst,
-- wobei der zweite Zellstapel (10) mittels der zweiten Anschlussgruppe (24) mit der Betriebsmittelvorrichtung (4) fluidisch koppelbar ist,
--- wobei die zweite Anschlussgruppe (24) ein drittes Anschlussorgan (25) und ein viertes Anschlussorgan (26) umfasst, sodass der zweite Zellstapel (10) über die zweite Anschlussgruppe (24) mit Elektrolyt versorgbar ist und/oder Produktgas vom zweiten Zellstapel (10) über die zweite Anschlussgruppe (24) abführbar ist,
- wobei die erste Anschlusszone (5) in einer ersten Anschlussebene (14) der Anschlussvorrichtung (2) ausgebildet ist und die zweite Anschlusszone (6) in einer zweiten Anschlussebene (15) der Anschlussvorrichtung (2) ausgebildet ist,
**dadurch gekennzeichnet, dass**
- die erste Anschlussebene (14) parallel und voneinander distanziert zur zweiten Anschlussebene (15) angeordnet ist, wobei die erste Anschlusszone (5) der zweiten Anschlusszone (6) gegenüberliegend angeordnet ist, wobei die erste Anschlussebene (14) zur zweiten Anschlussebene (15) kongruent ausgerichtet ist, und wobei die erste Anschlusszone (5) und die zweite Anschlusszone (6) weiterhin am gemeinsamen Tragelement (11) angeordnet sind.

2. Elektrochemievorrichtung (1) nach Anspruch 1, **dadurch gekennzeichnet, dass** die Anschlussvorrichtung (2) einstückig verbunden ausgebildet ist.

3. Elektrochemievorrichtung (1) nach einem der vorhergehenden Ansprüche, **dadurch gekennzeichnet, dass** die Anschlussvorrichtung (2) einteilig ausgebildet ist.

4. Elektrochemievorrichtung (1) nach einem der vorhergehenden Ansprüche, **dadurch gekennzeichnet, dass** die erste Normalachse (7) und die zweite Normalachse (9) zueinander deckungsgleich ausgerichtet sind.

5. Elektrochemievorrichtung (1) nach einem der Ansprüche 1 bis 3, **dadurch gekennzeichnet, dass** die erste Normalachse (7) und die zweite Normalachse (9) zueinander parallel und versetzt ausgerichtet sind.

6. Elektrochemievorrichtung (1) nach einem der vorhergehenden Ansprüche, **dadurch gekennzeichnet, dass** das erste Anschlussorgan (22) der ersten Anschlussgruppe (12) mit dem dritten Anschlussorgan (25) der zweiten Anschlussgruppe (24) mittels einem ersten Fluidkanal (27) mit der Betriebsmittelvorrichtung (4) fluidisch koppelbar ist, und dass das zweite Anschlussorgan (23) der ersten Anschlussgruppe (12) mit dem vierten Anschlussorgan (26) der zweiten Anschlussgruppe (24) mittels einem zweiten Fluidkanal (28) mit der Betriebsmittelvorrichtung (4) fluidisch koppelbar ist, wobei der erste Fluidkanal (27) und der zweite Fluidkanal (28) in der Anschlussvorrichtung (2) innenliegend bzw. integriert ausgebildet sind.

7. Elektrochemievorrichtung (1) nach Anspruch 6, **dadurch gekennzeichnet, dass** der erste Fluidkanal (27) und der zweite Fluidkanal (28) jeweils als Bohrung (30) ausgebildet sind, wobei sich der erste Fluidkanal (27) und der zweite Fluidkanal (28) jeweils ausgehend von einer Seitenfläche (29) der Anschlussvorrichtung (2) erstrecken und an der ersten Anschlusszone (5) und der wenigstens einen zweiten Anschlusszone (6) vorbeigeführt sind.

8. Elektrochemievorrichtung (1) nach Anspruch 6, **dadurch gekennzeichnet, dass** die Anschlussvorrichtung (2) zweiteilig aus einem ersten Teilelement (33) und einem zweiten Teilelement (34) ausgebildet ist, wobei das erste Teilelement (33) die erste Anschlusszone (5) umfasst, und wobei eine erste Querschnittshälfte des ersten Fluidkanals (27) überwiegend im ersten Teilelement (33) und eine zweite Querschnittshälfte des ersten Fluidkanals (27) überwiegend im zweiten Teilelement (34) ausgebildet sind.

9. Elektrochemievorrichtung (1) nach Anspruch 8, **dadurch gekennzeichnet, dass** das die zweite Anschlusszone (6) am zweiten Teilelement (34) angeordnet ist.

10. Elektrochemievorrichtung (1) nach Anspruch 6, **dadurch gekennzeichnet, dass** die Anschlussvorrichtung (2) dreiteilig aus einem ersten Teilelement (33), einem zweiten Teilelement (34) und einem dritten Teilelement (35) ausgebildet ist, wobei das erste Teilelement (33) die erste Anschlusszone (5) umfasst und das zweite Teilelement (34) die zweite Anschlusszone (6) umfasst, wobei das dritte Teilelement (35) zwischen dem ersten Teilelement (33) und dem zweiten Teilelement (34) angeordnet ist, und wobei der erste Fluidkanal (27) überwiegend im dritten Teilelement (35) ausgebildet ist.

11. Elektrochemievorrichtung (1) nach Anspruch 6, **dadurch gekennzeichnet, dass** der erste Fluidkanal (27) ein Drosselorgan (32) umfasst, wobei das Drosselorgan (32) in der Anschlussvorrichtung (2) integriert bzw. innenliegend ausgebildet oder angeordnet ist.

12. Elektrochemievorrichtung (1) nach einem der vorhergehenden Ansprüche, **dadurch gekennzeichnet, dass** die Anschlussorgane (22, 23, 25, 26) als Langlochbohrungen ausgebildet sind, wobei die Langlochbohrungen jeweils entlang einem Kreisdurchmesser um die, der jeweiligen Anschlusszone (5, 6) zugehörige Normalachse (7, 9), als ein kreissegmentförmiges Langloch ausgebildet sind.

13. Elektrochemievorrichtung (1) nach einem der vorhergehenden Ansprüche, **dadurch gekennzeichnet, dass** der erste Zellstapel (8) zwischen einer ersten Endplatte (18) und der Anschlussvorrichtung (2) gelagert ist und dass der zweite Zellstapel (10) zwischen einer zweiten Endplatte (19) und der Anschlussvorrichtung (2) gelagert ist, wobei die erste Endplatte (18) mittels eines ersten Verbindungselements (20) und die zweite Endplatte (19) mittels eines zweiten Verbindungselements (21) jeweils mit der Anschlussvorrichtung (2) gekoppelt sind.

14. Elektrochemievorrichtung (1) nach einem der vorhergehenden Ansprüche, **dadurch gekennzeichnet, dass** die Anschlussvorrichtung (2) an einer Montagefläche (17) ein Befestigungselement (31) umfasst, wobei die Anschlussvorrichtung (2) mittels dem Befestigungselement (31) an einem Rahmen (16) oder in einem Gehäuse aufnehmbar bzw. haltbar ist.

15. Elektrochemievorrichtung (1) nach einem der vorhergehenden Ansprüche, **dadurch gekennzeichnet, dass** die anreihbaren elektrochemischen Zellen (3) eine Anionen-Austauschermembran umfassen.

16. Elektrochemievorrichtung (1) nach einem der vorhergehenden Ansprüche, **dadurch gekennzeichnet, dass** der erste Zellstapel (8) ein erstes Verbindungsorgan und der zweite Zellstapel (10) ein zweites Verbindungsorgan umfassen, wobei mittels des jeweiligen Verbindungsorganes die jeweils aneinandergereiht angeordneten elektrochemischen Zellen (3) zueinander lagefest positionierbar sind.

## Claims

1. An electrochemical device (1) comprising an attachment device (2), stackable electrochemical cells (3), in particular electrolysis or fuel cells, and an operating means device (4),
- wherein the electrochemical cells (3) are arranged in a stack starting from a first attachment zone (5) of the attachment device (2) along a first normal axis (7) to the first attachment zone (5) and form a first cell stack (8),
- wherein the attachment device (2) comprises a first attachment group (12) in the region of the first attachment zone (5),
-- wherein the first cell stack (8) can be coupled to the operating means device (4) in a fluid manner by means of the first attachment group (12),
--- wherein the first attachment group (12) comprises a first attachment member (22) and a second attachment member (23) such that the first cell stack (8) can be supplied with electrolyte via the first attachment group (12), and/or product gas can be discharged from the first cell stack (8) via the first attachment group (12),
- wherein the attachment device (2) has a common support element (11), the first attachment zone (5) and at least one second attachment zone (6) being jointly arranged on said support element (11).
- wherein the electrochemical cells (3) are arranged in a stack starting from the second attachment zone (6) of the attachment device (2) along a second normal axis (9) to the second attachment zone (6) and form a second cell stack (10),
- wherein the attachment device (2) comprises a second attachment group (24) in the region of the second attachment zone (6),
-- wherein the second cell stack (10) can be coupled to the operating means device (4) in a fluid manner by means of the second attachment group (24),
--- wherein the second attachment group (24) comprises a third attachment member (25) and a fourth attachment member (26) such that the second cell stack (10) can be supplied with electrolyte via the second attachment group (24), and/or product gas can be discharged from the second cell stack (10) via the second attachment group (24),
- wherein the first attachment zone (5) is formed in a first attachment plane (14) of the attachment device (2) and the second attachment zone (6) is formed in a second attachment plane (15) of the attachment device (2),
**characterized in that**
- the first attachment plane (14) is arranged parallel to and spaced from the second attachment plane (15), wherein the first attachment zone (5) is arranged opposite the second attachment zone (6), the first attachment plane (14) being aligned congruently to the second attachment plane (15), and wherein the first attachment zone (5) and the second attachment zone (6) are still arranged on a common support element (11).

2. The electrochemical device (1) according to claim 1, **characterized in that** the attachment device (2) is configured with an integral connection.

3. The electrochemical device (1) according to one of the preceding claims, **characterized in that** the attachment device (2) is formed as one piece.

4. The electrochemical device (1) according to one of the preceding claims, **characterized in that** the first normal axis (7) and the second normal axis (9) are aligned congruently to one another.

5. The electrochemical device (1) according to one of claims 1 to 3, **characterized in that** the first normal axis (7) and the second normal axis (9) are aligned parallel and offset to one another.

6. The electrochemical device (1) according to one of the preceding claims, **characterized in that** the first attachment member (22) of the first attachment group (12) can be coupled to the third attachment member (25) of the second attachment group (24) in a fluid manner by means of a first fluid channel (27) to the operating means device (4), and the second attachment member (23) of the first attachment group (12) can be coupled to the fourth attachment member (26) of the second attachment group (24) in a fluid manner by means of a second fluid channel (28) to the operating means device (4), wherein the first fluid channel (27) and the second fluid channel (28) are formed internally or integrated in the attachment device (2).

7. The electrochemical device (1) according to claim 6, **characterized in that** the first fluid channel (27) and the second fluid channel (28) are each configured as a bore (30), wherein the first fluid channel (27) and the second fluid channel (28) each extend from a lateral surface (29) of the attachment device (2) and are guided past the first attachment zone (5) and the at least one second attachment zone (6).

8. The electrochemical device (1) according to claim 6, **characterized in that** the attachment device (2) is formed in two parts from a first partial element (33) and a second partial element (34), wherein the first partial element (33) comprises the first attachment zone (5), and wherein a first cross-sectional half of the first fluid channel (27) is formed predominantly in the first partial element (33), and a second cross-sectional half of the first fluid channel (27) is formed predominantly in the second partial element (34).

9. The electrochemical device (1) according to claim 8, **characterized in that** the second attachment zone (6) is arranged on the second partial element (34).

10. The electrochemical device (1) according to claim 6, **characterized in that** the attachment device (2) is formed in three parts from a first partial element (33), a second partial element (34) and a third partial element (35), wherein the first partial element (33) comprises the first attachment zone (5) and the second partial element (34) comprises the second attachment zone (6), wherein the third partial element (35) is arranged between the first partial element (33) and the second partial element (34), and wherein the first fluid channel (27) is formed predominantly in the third partial element (35).

11. The electrochemical device (1) according to claim 6, **characterized in that** the first fluid channel (27) comprises a throttle element (32), wherein the throttle element (32) is integrated, formed or arranged inside of the attachment device (2).

12. The electrochemical device (1) according to one of the preceding claims, **characterized in that** the attachment members (22, 23, 25, 26) are configured as elongate boreholes, wherein the elongate boreholes are each configured as a circular segment-shaped elongate hole along a circular diameter about the normal axis (7, 9) associated with the respective attachment zone (5, 6).

13. The electrochemical device (1) according to one of the preceding claims, **characterized in that** the first cell stack (8) is mounted between a first end plate (18) and the attachment device (2), and that the second cell stack (10) is mounted between a second end plate (19) and the attachment device (2), wherein the first end plate (18) is coupled to the attachment device (2) by means of a first connection element (20) and the second end plate (19) is coupled to the attachment device (2) by means of a second connection element (21).

14. The electrochemical device (1) according to one of the preceding claims, **characterized in that** the attachment device (2) comprises a fastening element (31) on a mounting surface (17), wherein the attachment device (2) can be received or held on a frame (16) or in a housing by means of the fastening element (31).

15. The electrochemical device (1) according to one of the preceding claims, **characterized in that** the stackable electrochemical cells (3) comprise an anion-exchange membrane.

16. The electrochemical device (1) according to one of the preceding claims, **characterized in that** the first cell stack (8) comprises a first connection member and the second cell stack (10) comprises a second connection member, wherein the respective connection member can be used to position the electrochemical cells (3) arranged in a stack in a fixed position relative to one another.

## Revendications

1. Dispositif électrochimique (1) comprenant un dispositif de raccordement (2), des cellules électrochimiques (3) qui peuvent être agencées en rangée les unes à côtés des autres, en particulier des cellules électrolytiques ou des piles à combustible, et un dispositif pour milieu de fonctionnement (4),
- dans lequel des cellules électrochimiques (3) sont agencées en rangée les unes à côtés des autres, à partir d'une première zone de raccordement (5) du dispositif de raccordement (2) le long d'un premier axe (7) normal par rapport à la première zone de raccordement (5), et forment un premier empilement de cellules (8),
- dans lequel le dispositif de raccordement (2) comprend un premier groupe de raccordement (12) dans la région de la première zone de raccordement (5),
-- dans lequel le premier empilement de cellules (8) peut être couplée fluidiquement au dispositif pour milieu de fonctionnement (4) au moyen du premier groupe de raccordement (12),
--- dans lequel le premier groupe de raccordement (12) comprend un premier organe de raccordement (22) et un deuxième organe de raccordement (23), de sorte que le premier empilement de cellules (8) peut être alimenté en électrolyte en passant par le premier groupe de raccordement (12) et/ou de sorte que le gaz produit peut être évacué du premier empilement de cellules (8) en passant par le premier groupe de raccordement (12),
- dans lequel le dispositif de raccordement (2) présente un élément de support (11) commun sur lequel sont communément agencées la première zone de raccordement (5) et au moins une deuxième zone de raccordement (6),
- dans lequel des cellules électrochimiques (3) sont agencées en rangée les unes à côtés des autres, à partir de la deuxième zone de raccordement (6) du dispositif de raccordement (2) le long d'un deuxième axe (9) normal par rapport à la deuxième zone de raccordement (6), et forment un deuxième empilement de cellules (10),
- dans lequel le dispositif de raccordement (2) comprend un deuxième groupe de raccordement (24) dans la région de la deuxième zone de raccordement (6),
-- dans lequel le premier empilement de cellules (10) peut être couplée fluidiquement au dispositif pour milieu de fonctionnement (4) au moyen du premier groupe de raccordement (24),
--- dans lequel le deuxième groupe de raccordement (24) comprend un troisième organe de raccordement (25) et un quatrième organe de raccordement (26), de sorte que le deuxième empilement de cellules (10) peut être alimentée en électrolyte en passant par le deuxième groupe de raccordement (24) et/ou de sorte que le gaz produit peut être évacué du deuxième empilement de cellules (10) en passant par le deuxième groupe de raccordement (24),
- dans lequel la première zone de raccordement (5) est réalisée dans un premier plan de raccordement (14) du dispositif de raccordement (2) et la deuxième zone de raccordement (6) est réalisée dans un deuxième plan de raccordement (15) du dispositif de raccordement (2),
**caractérisé en ce que**
- le premier plan de raccordement (14) est agencé parallèlement au deuxième plan de raccordement (15) et à distance de celui-ci , dans lequel la première zone de raccordement (5) est agencée à l'opposé de la deuxième zone de raccordement (6), dans lequel le premier plan de raccordement (14) est orienté de manière coïncidente par rapport au deuxième plan de raccordement (15), et dans lequel la première zone de raccordement (5) et la deuxième zone de raccordement (6) continuent d'être agencées sur l'élément de support (11) commun.

2. Dispositif électrochimique (1) selon la revendication 1, **caractérisé en ce que** le dispositif de raccordement (2) est réalisé de manière à être relié d'un seul tenant.

3. Dispositif électrochimique (1) selon l'une quelconque des revendications précédentes, **caractérisé en ce que** le dispositif de raccordement (2) est réalisé d'une seule pièce.

4. Dispositif électrochimique (1) selon l'une quelconque des revendications précédentes, **caractérisé en ce que** le premier axe normal (7) et le deuxième axe normal (9) sont alignés de manière coïncidente l'un par rapport à l'autre.

5. Dispositif électrochimique (1) selon l'une quelconque des revendications 1 à 3, **caractérisé en ce que** le premier axe normal (7) et le deuxième axe normal (9) sont orientés de manière parallèle et décalée l'un par rapport à l'autre.

6. Dispositif électrochimique (1) selon l'une quelconque des revendications précédentes, **caractérisé en ce que** le premier organe de raccordement (22) du premier groupe de raccordement (12) peut être couplé fluidiquement au troisième organe de raccordement (25) du deuxième groupe de raccordement (24) grâce au dispositif pour milieu de fonctionnement (4) au moyen d'un premier canal de fluide (27), et **en ce que** le deuxième organe de raccordement (23) du premier groupe de raccordement (12) peut être couplé fluidiquement au quatrième organe de raccordement (26) du deuxième groupe de raccordement (24) grâce au dispositif pour milieu de fonctionnement (4) au moyen d'un deuxième canal de fluide (28) , dans lequel le premier canal de fluide (27) et le deuxième canal de fluide (28) sont réalisés à l'intérieur du dispositif de raccordement (2) ou en étant intégrés à celui-ci.

7. Dispositif électrochimique (1) selon la revendication 6, **caractérisé en ce que** le premier canal de fluide (27) et le deuxième canal de fluide (28) sont réalisés respectivement sous la forme d'un alésage (30), dans lequel le premier canal de fluide (27) et le deuxième canal de fluide (28) s'étendent respectivement à partir d'une surface latérale (29) du dispositif de raccordement (2) et passent devant la première zone de raccordement (5) et la au moins une deuxième zone de raccordement (6).

8. Dispositif électrochimique (1) selon la revendication 6, **caractérisé en ce que** le dispositif de raccordement (2) est réalisé en deux parties à partir d'un premier sous-élément (33) et d'un deuxième sous-élément (34), dans lequel le premier sous-élément (33) comprend la première zone de raccordement (5), et dans lequel une première moitié de section transversale du premier canal de fluide (27) est réalisée principalement au sein du premier sous-élément (33) et une deuxième moitié de section transversale du premier canal de fluide (27) est réalisée principalement au sein du deuxième sous-élément (34).

9. Dispositif électrochimique (1) selon la revendication 8, **caractérisé en ce que** la deuxième zone de raccordement (6) est agencée au niveau du deuxième sous-élément (34).

10. Dispositif électrochimique (1) selon la revendication 6, **caractérisé en ce que** le dispositif de raccordement (2) est réalisé en trois parties à partir d'un premier sous-élément (33), d'un deuxième sous-élément (34) et d'un troisième sous-élément (35), dans lequel le premier sous-élément (33) comprend la première zone de raccordement (5) et le deuxième sous-élément (34) comprend la deuxième zone de raccordement (6), dans lequel le troisième sous-élément (35) est agencé entre le premier sous-élément (33) et le deuxième sous-élément (34), et dans lequel le premier canal de fluide (27) est réalisé principalement au sein du troisième sous-élément (35).

11. Dispositif électrochimique (1) selon la revendication 6, **caractérisé en ce que** le premier canal de fluide (27) comprend un organe d'étranglement (32), dans lequel l'organe d'étranglement (32) est réalisé ou agencé en étant intégré dans le dispositif de raccordement (2) ou à l'intérieur de celui-ci.

12. Dispositif électrochimique (1) selon l'une quelconque des revendications précédentes, **caractérisé en ce que** les organes de raccordement (22, 23, 25, 26) sont réalisés sous la forme de trous allongés, dans lequel les trous allongés sont réalisés sous forme de trou allongé en segment de cercle respectivement le long d'un diamètre de cercle autour de l'axe normal (7, 9) associé à la zone de raccordement (5, 6) respective.

13. Dispositif électrochimique (1) selon l'une quelconque des revendications précédentes, **caractérisé en ce que** le premier empilement de cellules (8) est installé entre une première plaque d'extrémité (18) et le dispositif de raccordement (2) et **en ce que** le deuxième empilement de cellules (10) est installé entre une deuxième plaque d'extrémité (19) et le dispositif de raccordement (2), dans lequel la première plaque d'extrémité (18) est couplée respectivement au dispositif de raccordement (2) au moyen d'un premier élément de liaison (20) et la deuxième plaque d'extrémité (19) est couplée respectivement au dispositif de raccordement au moyen d'un deuxième élément de liaison (21).

14. Dispositif électrochimique (1) selon l'une quelconque des revendications précédentes, **caractérisé en ce que** le dispositif de raccordement (2) comprend un élément de fixation (31) au niveau d'une surface de montage (17), dans lequel le dispositif de raccordement (2) peut être accueilli ou retenu sur un cadre (16) ou dans un boîtier au moyen de l'élément de fixation (31).

15. Dispositif électrochimique (1) selon l'une quelconque des revendications précédentes, **caractérisé en ce que** les cellules électrochimiques pouvant être agencées en rangée les unes à côtés des autres comprennent une membrane échangeuse d'anions.

16. Dispositif électrochimique (1) selon l'une quelconque des revendications précédentes, **caractérisé en ce que** le premier empilement de cellules (8) comprend un premier organe de liaison et le deuxième empilement de cellules (10) comprend un deuxième organe de liaison, dans lequel les cellules électrochimiques (3) agencées respectivement en rangées les unes à côté des autres peuvent être positionnées de manière fixe les unes par rapport aux autres au moyen de l'organe de liaison respectif.
